# EUROPÄISCHE PATENTSCHRIFT

(11) **EP 1 199 821 B1**
(45) Veröffentlichungstag und Bekanntmachung des Hinweises auf die Patenterteilung: **11.08.2010**
(21) Anmeldenummer: 01440310.9
(22) Anmeldetag: 21.09.2001
(51) Int. Cl.: H04B 10/08, H04B 10/158

(54) **"Empfänger mit rückgekoppeltem Filter sowie Augenmonitor für den rückgekoppelten Filter"**
Receiver with feedback filter and eye-monitor for the feedback filter
Récepteur avec filtre à retroaction et un appareil d'observation de diagramme de l'oeil pour ce filtre

(30) Priorität: 20.10.2000 DE 10052279
(43) Veröffentlichungstag der Anmeldung: 24.04.2002
(73) Patentinhaber: Alcatel Lucent, 75008 Paris (FR)
(72) Erfinder: Buchali, Fred Dr., 71336 Waiblingen (DE)
(74) Vertreter: Schmidt, Werner Karl

(56) Entgegenhaltungen:
- US-A- 4 449 223
- ELLEMEYER T ET AL: "A 10-Gb/s Eye-Opening Monitor IC for Decision-Guided adaptation of the Frequency Response of an Optical Receiver" IEEE JOURNAL OF SOLID-STATE CIRCUITS, IEEE INC. NEW YORK, US, Bd. 35, Nr. 12, Dezember 2000 (2000-12), Seiten 1958-1963, XP002247996 ISSN: 0018-9200
- ELLERMEYER T ET AL: "A 10 Gb/s eye opening monitor IC for decision-guided optimization of the frequency response of an optical receiver" 7. Februar 2000 (2000-02-07), IEEE INTERNATIONAL SOLID STATE CIRCUITS CONFERENCE, IEEE INC. NEW YORK, US, PAGE(S) 50-51 , XP002187755 ISSN: 0193-6530 * das ganze Dokument *

## Beschreibung

### Stand der Technik:

Die Erfindung geht aus von einem Empfänger mit einem rückgekoppelten Filter sowie einem Augenmonitor für das rückgekoppelte Filter. Weiterhin geht die Erfindung aus von einem Verfahren zur Entscheidung eines digital übertragenen optischen Signals sowie von einem Verfahren zur schnellen Messung der Augenöffnung und des Q-Faktors eines Datensignals.

Neben der Dämpfung ist die Signaldispersion der optischen Signale das hauptsächlich limitierende Kriterium, das Übertragungsstrecken und Bitraten in faseroptischen Systemen beeinflusst. Die Effekte der Dispersion und ihre Limitierungen können durch geeignete Signalverarbeitung des optischen sowie des rückgewonnenen elektrischen Signals ausgeglichen werden. Im praktischen Einsatz ist es dabei notwendig, die Signalverarbeitung adaptiv zu gestalten, da die Dispersionseffekte der Faser sich mit der Zeit verändern. Durch die Dispersionseffekte, beispielsweise hervorgerufen durch Polarisationsmodendispersion treten Überlappungen von Signalanteilen unterschiedlicher Polarisation auf. Die Signale werden aufgrund dieser Dispersionseffekte zeitlich verschmiert und kommen unaufgelöst im optischen Empfänger an. Um die Signale, die aufgrund von Dispersionseffekten überlagert im Empfänger ankommen, wieder zu trennen, werden optische Kompensatoren und elektronische Filter eingesetzt.

Elektronische Filter werden beispielsweise in der Veröffentlichung "Equalization of Bit Distortion Induced by Polarization Mode Dispersion" H. Bülow, NOC'97, Antwerp, Seite 65 bis 72 dargestellt. Hier wird mit Beispiel6 der Tabelle 1 ein decision feedback equalizer vorgestellt. Diese Art von elektronischem Filter enthält wenigstens eine Entscheiderschaltung, die das ankommende Signal zu "0" oder "1" entscheidet. Um die Daten mit hohen Wahrscheinlichkeiten rückzugewinnen, muss der decision feedback equalizer bzw. seine Schwellwerte optimal eingestellt werden.

Aus der Veröffentlichung "Adaptiv nonlinear cancelation for high speed fiber optic systems" Jack Winters und S. Kasturia, Journal of Lightwave Technology, Vol. 10, Nr. 9, Seite 971ff ist ein nichtlineares elektronisches Filter bekannt. Um die zeitlichen Probleme mit der analogen Rückkopplung im nichtlinearen Filter zu verkleinern, werden zwei Schwellwertentscheider mit unterschiedlichen Schwellwerten parallel zueinander geschaltet. Die Ergebnisse der parallel geschalteten Schwellwertentscheider werden über einen ansteuerbaren Multiplexer zusammengeführt. Die in Figur 7 dargestellte Ausführungsform verwendet zwei Schwellwertentscheider, deren Ausgänge mit einem Multiplexer verbunden sind. Ein D-Flip-Flop und eine Rückkoppelschleife beschalten den Multiplexer des Filters. Eine periphere Elektronik ermittelt die einzustellenden Schwellwerte. Abhängig vom zuletzt entschiedenen Bit wird die richtige Entscheidung am Multilexer ausgewählt. Mit einem solchen nichtlinearen Filter lassen sich Signale entzerren, wenn die Verzögerungen zwischen langsamen und den schnellen Signalanteilen sich innerhalb eines Zeittakts bewegen.

Zur Rückgewinnung des Signaltaktes, mit dem die Schwellwertentscheider angesteuert werden, können herkömmliche Taktschaltungen mit phasenverriegelten Schleifen, sogenannte PLL-Schaltungen (phase locked loop), verwendet werden. Jedoch kommt es bei sehr starken Verzerrungen, die beispielsweise bei einer großen PDM auftreten, zu folgendem Problem: Der mit üblichen Taktschaltungen regenerierte Signaltakt hat eine starke Phasenschwankung, deren Größe abhängig von der Signalverzerrung ist. Deshalb muss bei starken Signalsverzerrungen üblicherweise die Taktschaltung noch um zusätzliche Phasenschieber erweitert werden, die als adaptive Regler in den Taktpfad eingefügt werden, um die im Phasenschwankungen zu kompensieren.

Ein Problem bleibt bei den bisher beschriebenen Verfahren bestehen. Die Parameter zur Rückkopplung in die Rückkopplungsschleife des elektronischen Filters werden nur sehr indirekt gewonnen.

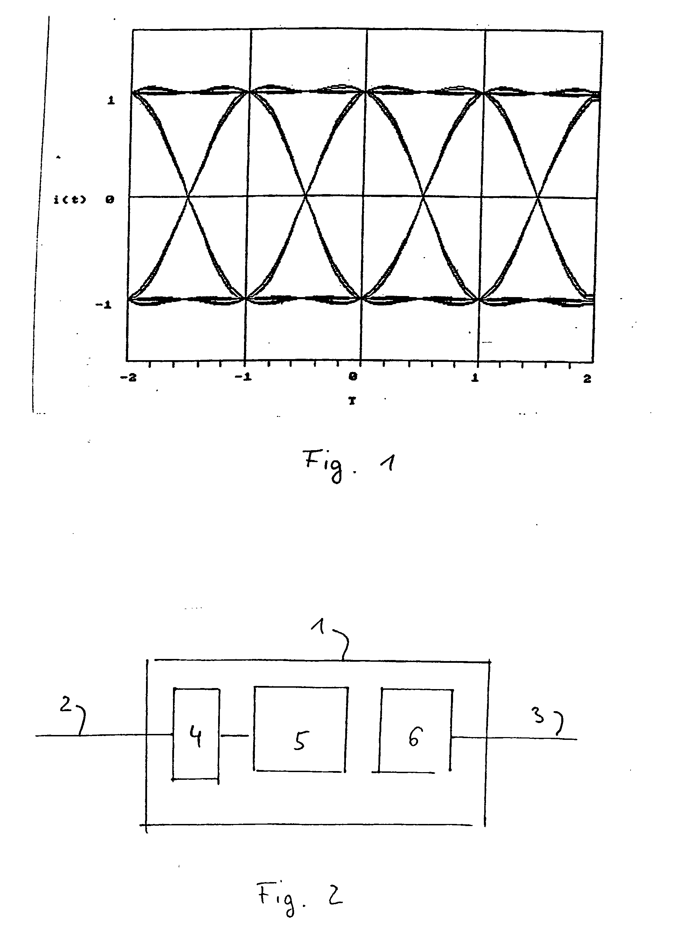

Eine direkte Messung der Qualität eines Übertragungskanals bei einer digitalen Übertragung erfolgt mit Hilfe eines Augendiagramms. Das Augendiagramm ist ein hervorragendes Hilfsmittel, um Fehler in den Hardware-Komponenten eines Übertragungssystems zu bestimmen, und qualitative Aussagen über die Leistung des Systems zu treffen. Für die Messung des Augendiagramms wird der Bitblock mit dem externen Trigger eines Oszilloskops verbunden. Das empfangene und demodulierte Signal wird mit dem y-Eingang verbunden. Bei einer horizontalen Zeitbasis von vier Bitperioden wie in Figur 1 dargestellt werden durch die Trägheit der Röhre des Oszilloskopes, die Überlagerung der gefilterten Bits des Signals dargestellt.

Durch Störungen auf dem Übertragungsweg kann sich das Auge schließen und je geringer die Augenhöhe ist, um so schwieriger lassen sich die beiden Zustände des Signals unterscheiden.

Eine direkte Messung der Augenhöhe ist daher zur Optimierung des Übertragungskanals von großer Bedeutung. Alle bisher existierenden elektronischen Augenmonitore sind für Datenraten von 10 Gbit/s und mehr nicht mehr schnell genug. Sie sind für große Genauigkeiten ausgelegt und können den schnellen Änderungen der Dispersion nicht folgen.

Ein Augenmonitor nach dem Stand der Technik ist aus XP-002187755 bekannt.

### Beschreibung der Erfindung:

Gegenstand der Erfindung ist ein optischer Empfänger mit einem elektronischen Filter, dessen Schwellwerte über Augenmonitore eingestellt werden. Weiterhin ist Gegenstand der Erfindung ein schneller Augenmonitor, der eine direkte Messung der Qualität der Übertragungsstrecke auch bei hohen Bitraten erlaubt.

Ausführungsbeispiele der Erfindung sind in den Zeichnung dargestellt und in der nachfolgenden Beschreibung näher erläutert.

Es zeigt:
- Fig. 1: ein Augendiagramm,
- Fig. 2: schematisch ein Empfänger mit Augenmonitor,
- Fig. 3: einen Empfänger mit DFE und Augenmonitoren,
- Fig. 4: Ausführungsform eines schnellen Augenmonitors,
- Fig. 5: Ergebnis der Messung der Augenhöhe und
- Fig. 6: Einfluss des Kleinsignals auf die Messung der Augenhöhe.

Fig. 2 zeigt schematisch einen Empfänger 1 für optische Signale. Der Empfänger 1 ist mit einer optischen Übertragungsstrecke 2 verbunden. Im Empfänger 1 befindet sich ein opto-elektrischer Wandler 4 der mit einem schnellen Augenmonitor 5 verbunden ist. Der schnelle Augenmonitor 5 ist wiederum an ein Filter 6 angeschlossen. Der Ausgang des Filter 6 ist mit einer elektrischen Ausgangsleitung 3 verbunden.

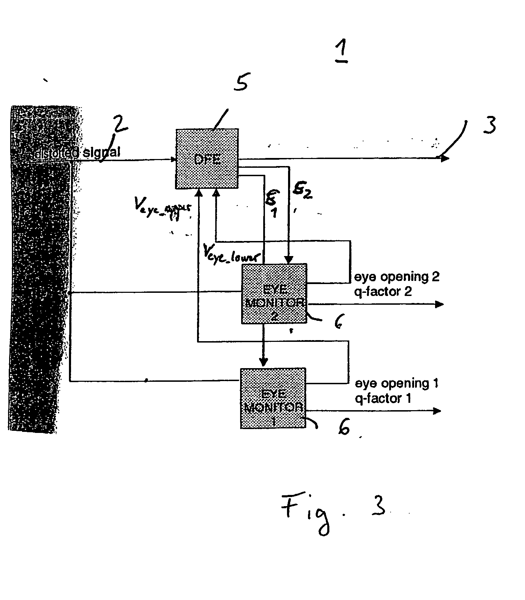

Fig. 3 zeigt eine beispielhafte Ausführungsform eines Empfängers 1 für optische Signale. Das elektronische Filter 5 in diesem speziellen Fall handelt es sich um ein DFE (distributed feedback equalizer) ist mit der optischen Übertragungsstrecke 2 und mit einem, hier nicht eingezeichneten, optoelektronischen Wandler verbunden. Das elektronische Filter besteht im allgemeinsten Fall aus zwei parallel geschalteten Schwellwertentscheidern. Die Ausgänge der Schwellwertentscheider sind mit einem Schalter verbunden, so dass das Signal entweder beim 1. Schwellwertentscheider des DFE abgetastet wird oder im 2. Schwellwertentscheider. Die Schwellen der Schwellwertentscheider sind einstellbar. Zur Ausführung der Erfindung ist aber auch jedes andere adaptive System (optischer PMD Kompensator, elektronisches Filter) geeignet, dessen Parameter mit einer Qualitätsmessung des Kanals eingestellt werden können. Ein Beispiel eines DFE ist auch aus der EP-A-1 139 622 bekannt. Der DFE 5 ist mit der Signal Ausgangsleitung 3 verbunden. Weiterhin besteht eine Verbindung zwischen dem DFE 5 und einem 1. Augenmonitor 61 und einem zweiten Augenmonitor 62. Der DFE 5 weist weiterhin zu jeweils einem Augenmonitor eine Steuerleitung S1 und S2 auf. Die vom DFE 5 entschiedenen Signale sind um so besser, um so besser die Qualität der Übertragungsleitung in dem Augenmonitor dargestellt, gemessen, und als Parameter zur Verfügung gestellt werden können. Die Schwellwerte des DFE sind dabei über die beiden Augenmonitore einstellbar. Die Augenmonitore liefern jeweils einen Schwellwert V_{eye_lower}, und V_{eyeuper}. Diese Messgrößen werden von den Augenmonitoren ermittelt. Dabei messen die Augenmonitoren die Ränder der Augenöffnung des Signals. Durch die Messung der beiden Extremwerte werden die Parameter des Entscheiders in den elektronischen Filter DFE 5 bestimmt. Durch die Messung an den Extrempunkten der Augenöffnung wird die Entscheidung in der Mitte der Augenöffnung für das Signal verbessert. Mit einer solchen Anordnung werden nicht nur die Signale mit hoher Wahrscheinlichkeit betrachtet, sondern das Verfahren stützt sich auf Signale mit geringer Wahrscheinlichkeit ab. Dadurch wird die Bitfehlerrate deutlich verbessert. Der DFE 5 besitzt Steuerausgänge S1 und S2, die aktivgeschaltet sind, wenn der DFE die Entscheidung durch Vth1 bzw. Vth2 durchführt. Die Augenmonitore arbeiten nach Aktivierung durch die Steuersignale S1 und S2. Die Augenmonitore liefern Information über optimale Schwellwerte und geben sie an den DFE 5 zurück.

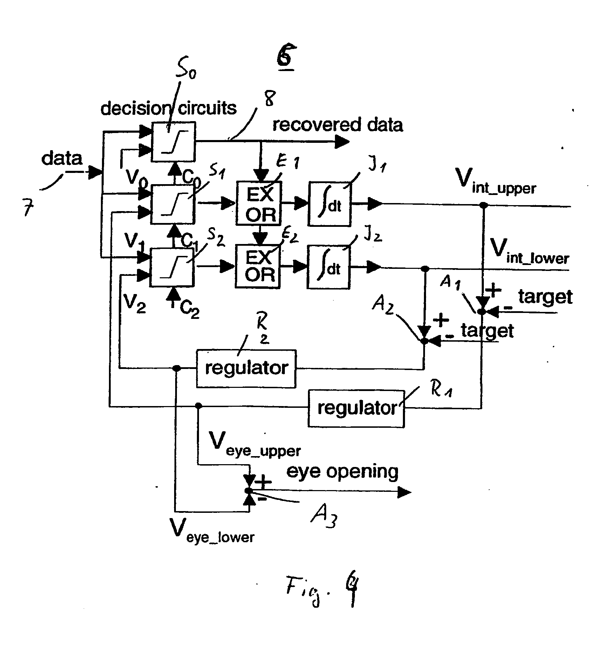

Eine Ausführungsform für einen schnellen Augenmonitor ist in Fig. 4 dargestellt.

Figur 4 zeigt den schnellen Augenmonitor 5. Der Dateneingang 7 ist mit drei Schwellwertentscheidern S0, S1 und S2 verbunden. Der Ausgang des Schwellwertentscheiders S0 ist die Datensignalleitung 8. Die Ausgänge der Schwellwertentscheider S1 und S2 sind jeweils mit einer EXOR-Schaltung E1 und E2 verbunden. Der zweite Eingang der EXOR Schaltungen E1 und E2 weist jeweils eine Verbindung zu der Datensignalleitung 8 auf.
Der Ausgang der EXOR-Schaltungen E1 und E2 ist mit jeweils einem Integrator I1 und 12 verbunden. Die Ausgänge der Integratoren sind wiederum jeweils mit einem Addierer A1 und A2 verbunden, dessen zweiter Eingang mit einer Leitung zur Einstellung eines Sollwertes verbunden ist. Ausgangsseitig liegen die Addierer A1 und A2 and Regulatoren R1 und R2 an. Die Ausgänge der Regulatoren sind einerseits mit einem weiteren Addierer A3 verbunden als auch mit den Schwellwertentscheidern S1 uns S2, deren Schwellwert sie einstellen.

Der Ausgang des Addierer A3 ist mit einer Datenleitung für die Augenhöhe verbunden.

Der schnelle Augenmonitor 5 empfängt die optisch-elektrisch gewandelten Daten des Wandlers 4 auf seiner Eingangssignalseite 7. Die empfangenen Daten sind durch nichtlineare Effekte auf der Übertragungsstrecke gestört und verschmiert worden. Diese gestörten Daten werden auf die drei Schwellwertentscheider aufgeteilt. Sie werden in den Schwellwertentscheidern mit einem Schwellwert verglichen. Schwellwertentscheider S0 vergleicht die empfangenen gestörten Daten mit einem Referenzwert V0. Der Vergleich im Schwellwertentscheider S0 wird beeinflusst durch einen Parameter C0, der aus dem Ergebnis der Messung der Augenhöhe gewonnen wird. Das Ergebnis am Schwellwertentscheider S0 sind "entschiedene" Daten, die im idealen Fall den übertragenen Daten entsprechen.

Der Augenmonitor besteht aus zwei weiteren Schwellwertentscheidern S1 und S2. An ihnen liegen jeweils das gestörte Eingangssignal und ein Schwellwert V1 und V2 an. Die Schwellwerte werden dabei so eingestellt, dass V1 und V2 am unteren und am oberen Rand Scheitelpunkt des Auges liegen. Die so jeweils entschiedenen Signale liegen an EXOR- Schaltungen E 1 und E2 an, in denen sie mit den entschiedenen Signalen des Datenkanals verglichen werden. Mit diesem Vergleich lassen sich die jeweiligen Fehler in den Monitorkanälen bestimmen. Die Fehler werden dann jeweils in den Integratoren I1 und 12 aufintegriert. Das Ergebnis ist für S1, E1 und I1 eine interne Spannung V_{int_upper}, die eine Stellgröße für den unteren Scheitelpunkt der Augenöffnung darstellt. Aus dem Monitorkanal S2, E2 und 12 erhält man die interne Stellgröße V_{int_lower}, die den unteren Scheitelpunkt des Auges repräsentiert.
Die internen Stellgrößen werden in den Addierern A1 und A2 mit einem voreingestellten Sollwert V_{1target} und V_{2target} verglichen. Die Abweichung der internen Größen von den Sollwerten dient zur Einstellung der Regulatoren R1 und R2. Deren Ausgangsspannung addiert am Addieren A3 ergibt einen Wert für die Augenöffnung. Dieser Wert soll einen optimalen Wert haben. Daher regeln die Regulatoren bei Abweichungen von den Stellgrößen die Schwellwerte für die Entscheider S1 und S2 nach und geben diese als Augenränder aus.

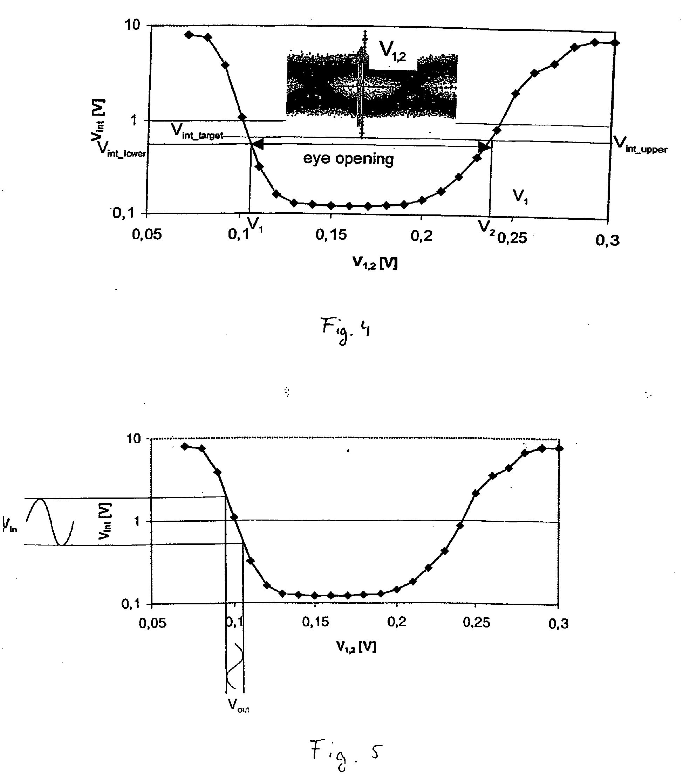

Figur 5 zeigt ein Ergebnis einer Messung mit dem schnellen Augenmonitor. Aufgetragen ist die interne Stellgröße Vᵢₙₜ über der Differenz V _{eye_upper} und V_{eye_lower}.
Innerhalb des Bildes ist ein Augendiagramm mit einer Augenöffnung gezeigt, die gleich der Größe V _{eye_upper}. - V_{eye_lower}. ist. Das Ergebnis der internen Stellgrößen V_{int_lower} und V_{int_upper} ist eingezeichnet. Man erkennt eine Abweichung der Stellgrößen vom eingestellten Sollwert V_{target}. In einem solchen Fall regen die Regulatoren die Schwellwerte der Entscheider so nach, dass die resultierenden internen Stellgrößen sich an den Sollwert annähern. Um die Schärfe der Augenränder zu messen wird wie in Figur 6 gezeigt dem Sollwert V_{target} ein Kleinsignal überlagert. Dieses sinusförmige Signal wird als Antwort in den internen Stellgrößen detektiert und ausgewertet.
Mit Hilfe dieser Kleinsignalantwort und der Augenöffnung wird der Q-Faktor der Übertragungsstrecke bestimmt. Dieser kann dann in einem Equalizer als aktueller Parameter der Übertragungsstrecke verwertet und das Signal damit optimiert werden.

Das erfindungsgemäße Verfahren zur Wiedergewinnung von Signalen mit Hilfe eines DFE und Parameterbestimmungen durch Messungen der Signalqualität in einem Augendiagram ermöglicht eine schnelle und optimale Wiedergewinnung von gestörten optischen Signalen. Die angeschlossenen Augenmonitore liefern dabei nicht nur die Rückkoppelsignale für die Schwellwerte des DFE 5, sondern liefern weiterhin wertvolle Hinweise für die Optimierung der Übertragungsstrecke. Die Messung des Q-Faktors sowie der Größe der Augenöffnung dient zur Optimierung der gesamten Übertragungsstrecke und des gesamten Übertragungssystems.

## Patentansprüche

1. Empfänger für den Empfang von optisch übertragenen Signalen mit einem optisch/elektrischen Wandler (4) und einem elektronischen rückgekoppelten Filter (5) **gekennzeichnet durch** wenigstens einen Augenmonitor (6) zur Bestimmung der Qualität der Übertragungsstrecke, wobei der Ausgang des mindestens einen Augenmonitors (6) mit dem Eingang des elektronischen rückgekoppelten Filters (5) verbunden ist.

2. Empfänger nach Anspruch 1 mit zwei Augenmonitoren (6₁ und 6₂), deren Ausgänge mit den Eingängen eines DFE (5) verbunden sind, wobei die beiden Augenmonitore (6) die Augenöffnung des Signals messen und als Parametersignal (V) ausgeben.

3. Empfänger nach Anspruch 1 mit einem Schnellen Augenmonitor (6) mit Schwellwertentscheidern (S1, S2), deren Schwellwert nahe an den scheitelpunkte des Auges eines Augendiagramms eingestellt sind und damit Pseudofehler generieren, mit einem Signalvergleicher (EXOR) zum Vergleich des richtig entschiedenen Signals mit dem durch Pseudofehler verfälschten Signals, mit Integratoren zur Summation der Pseudofehler und Regulatoren, die interne Stellgrößen (Fehlerraten V_{int upper}, V_{int_lower)} im Vergleich mit Sollwerten (V_{1target}, V_{2target}) nachführen und Ausgabe der Schwellwerte.

4. Empfänger nach Anspruch 3, wobei die Sollwerte von Kleinsignalanteilen überlagert sind.

5. Empfänger nach Anspruch 3, wobei die Ergebnisse der Messung der Augenöffnung und die Kleinsignalantwort in den internen Stellgrößen zur Bestimmung des Q-Faktors verwendet werden.

## Claims

1. A receiver for receiving optically transmitted signals with an optical/electrical converter (4) and an electronic feedback filter (5), **characterised by** at least one eye monitor (6) for determining the quality of the link, the output of the at least one eye monitor (6) being connected with the input of the electronic feedback filter (5).

2. A receiver according to claim 1 with two eye monitors (6₁ and 6₂), the outputs of which are connected with the inputs of a DFE (5), the two eye monitors (6) measuring the eye opening of the signal and outputting it as a parameter signal (V).

3. A receiver according to claim 1 with a fast eye monitor (6) with threshold value deciders (S1, S2), the threshold values of which are set close to the vertices of the eye of an eye diagram and thus generate pseudo-errors, with a signal comparator (EXOR) for comparing the correctly decided signal with the signal corrupted by pseudo-errors, with integrators for summing the pseudo-errors and regulators, which correct internal control variables (error rates V_{int_upper}, V_{int_lower}) in comparison with setpoint values (V_{1target}, V_{2target}) and deliver the threshold values.

4. A receiver according to claim 3, small signal components being superimposed on the setpoint values.

5. A receiver according to claim 3, the results of the measurement of the eye opening and the small signal response in the internal control variables being used to determine the Q factor.

## Revendications

1. Récepteur pour la réception de signaux transmis de manière optique, comprenant un convertisseur optique/électrique (4) et un filtre à contre-réaction électronique (5), **caractérisé par** au moins un moniteur oculaire (6) destiné à déterminer la qualité du trajet de transmission, la sortie de l'au moins un moniteur oculaire (6) étant reliée à l'entrée du filtre à contre-réaction électronique (5).

2. Récepteur selon la revendication 1, comprenant deux moniteurs oculaires (6₁ et 6₂) dont les sorties sont reliées aux entrées d'un DFE (5), les deux moniteurs oculaires (6) mesurant l'ouverture d'oeil du signal et la délivrant sous la forme d'un signal de paramètre (V).

3. Récepteur selon la revendication 1, comprenant un moniteur oculaire rapide (6) avec des discriminateurs à valeur de seuil (S1, S2) dont les valeurs de seuil sont réglées à proximité des sommets de l'oeil d'un diagramme en oeil et génèrent ainsi des pseudo-erreurs, comprenant un comparateur de signal (EXOR) pour comparer le signal correct discriminé avec le signal altéré par les pseudo-erreurs, comprenant des intégrateurs pour additionner les pseudo-erreurs et des régulateurs qui asservissent les grandeurs de commande internes (taux d'erreur V_{int_upper}, V_{int_lower}) par rapport à des valeurs de consigne (V_{1target}, V_{2target}) et délivrent des valeurs de seuil.

4. Récepteur selon la revendication 3, les valeurs de consignes étant superposées par des composantes de faible signal.

5. Récepteur selon la revendication 3, les résultats de la mesure de l'ouverture d'oeil et la réponse au faible signal étant utilisés dans les grandeurs de commande internes pour déterminer le facteur Q.
